# FASCICULE DE BREVET EUROPEEN

(11) **EP 0 857 411 B1**
(45) Date de publication et mention de la délivrance du brevet: **22.09.1999**
(21) Numéro de dépôt: 98440005.1
(22) Date de dépôt: 15.01.1998
(51) Int. Cl.: A01D 34/13, A01G 3/053

(54) **Taille-haies**
Heckenschere
Hedge trimmer

(30) Priorité: 16.01.1997 FR 9700560
(43) Date de publication de la demande: 12.08.1998
(73) Titulaire: Outils Wolf (Société Anonyme à Directoire et Conseil de Surveillance), 67160 Wissembourg (FR)
(72) Inventeur:
(74) Mandataire: Nuss, Pierre

(56) Documents cités:
- WO-A-95/21521
- DE-A- 4 224 665
- GB-A- 972 261
- US-A- 4 200 341
- US-A- 4 827 616

## Description

La présente invention concerne un dispositif de coupe avec deux lames de cisaillement glissant l'une contre l'autre, notamment un taille-haies.

On connaît de tels taille-haies dans de nombreuses formes de réalisation. Les deux lames de cisaillement y sont disposés en chevauchement mutuel et à translation l'une par rapport à l'autre en direction longitudinale, de sorte que le matériau à couper est saisi et coupé par les dents de coupe ou dents de sécurité disposées de part et d'autre en direction transversale. Leur entraînement s'effectue généralement de façon motorisée, le mouvement de rotation du moteur d'entraînement étant transformé, par un excentrique à double action, dans la translation souhaitée, en parallèle et en sens contraires, des deux lames de cisaillement.

Des baguettes de guidage sont montées extérieurement de part et d'autre pour le montage et le guidage des lames de cisaillement. Ces baguettes de guidage sont mutuellement reliées par plusieurs goujons transversaux, qui traversent des fentes de guidage correspondantes des lames de cisaillement.

On connaît également, par DE-A-4 224 665 un dispositif de coupe avec deux lames de cisaillement glissant l'une contre l'autre, au moins une baguette profilée du genre cuvette étant disposée le long d'au moins une première lame de cisaillement, sur son côté opposé à l'autre lame de cisaillement. Cette baguette est au moins partiellement ouverte vers la première lame de cisaillement qui présente des ouvertures pour le passage de lubrifiant sur les faces de glissement entre les deux lames de cisaillement, la baguette contenant intérieurement un lubrifiant.

La présente invention a pour but d'améliorer le fonctionnement des taille-haies connus, notamment de réduire l'usure sur les lames de cisaillement et la production de bruit, mais aussi d'augmenter les performances de coupe.

L'invention part de la constatation qu'avec des taille-haies classiques, environ 60 % de la puissance d'entraînement est utilisée pour surmonter des résistances de frottement, de sorte que seulement environ 40 % de la puissance d'entraînement est disponible pour la fonction proprement dite, à savoir le sectionnement du produit à couper. C'est pourquoi la présente invention se propose de réduire sensiblement les pertes par frottement.

Selon l'invention, ce but est atteint par le fait qu'au moins une baguette profilée du genre cuvette est disposée le long d'au moins une première lame de cisaillement, sur son côté opposé à l'autre lame de cisaillement, baguette qui est au moins partiellement ouverte vers la première lame de cisaillement et qui contient intérieurement un élément porteur de lubrifiant en matériau absorbant, et que cette première lame de cisaillement présente des ouvertures pour le passage du lubrifiant sur les faces de glissement entre les deux lames de cisaillement.

De la sorte, il est possible d'alimenter continuellement en lubrifiant les deux lames de cisaillement sur leurs faces de glissement pendant le service. Les pertes par frottement entre les lames de cisaillement glissant l'une contre l'autre sont ainsi considérablement réduites. Globalement, le taille-haies selon l'invention se distingue par une usure moindre, une température de frottement inférieure, des performances de coupe supérieures et un auto-nettoyage des lames de cisaillement. Enfin, et ce n'est pas le moins important, on obtient une production de bruit inférieure et plus agréable à l'oreille.

Afin que l'élément porteur de lubrifiant puisse être périodiquement à nouveau saturé de lubrifiant, la baguette profilée est équipée sur son côté extérieur de plusieurs graisseurs, ou bien l'élément porteur de lubrifiant est raccordé à un réservoir qui est lui-même logé en un endroit approprié sur le carter du taille-haies.

Afin que les faces de glissement entre les lames de cisaillement soient imprégnées de lubrifiant intimement et sur une grande surface, il est recommandé que l'élément porteur de lubrifiant s'applique au moins localement directement contre la première lame de cisaillement mentionnée, et ce opportunément dans la région où cette lame de cisaillement présente les ouvertures de passage vers les faces de glissement. Par force capillaire, le lubrifiant est transporté plus loin jusque dans la région des dents de coupe.

Afin de réduire encore plus les pertes par frottement, il est recommandé que l'élément porteur de lubrifiant et la baguette profilée qui le reçoit soient prolongés vers l'entraînement à excentrique, de sorte qu'une lubrification permanente y est également garantie.

Fondamentalement, il rentre dans le cadre de l'invention de ne positionner la baguette profilée pourvue de l'élément porteur de lubrifiant que dans des régions individuelles voisines dans la direction longitudinale de la lame de cisaillement. Mais il est particulièrement opportun de travailler avec une baguette profilée qui s'étend quasiment sur toute la longueur de la lame de cisaillement. Il est alors possible, selon une configuration supplémentaire avantageuse de l'invention, de se servir en même temps de la baguette profilée en remplacement de la baguette connue de maintien et de guidage pour les lames de cisaillement. A cet effet, la baguette profilée a seulement besoin d'être réalisée suffisamment rigide et d'être équipée de quelques goujons transversaux répartis sur la longueur, qui traversent des fentes longitudinales des deux lames de cisaillement et sont reliés, sur l'autre côté des lames de cisaillement, à un contre-élément qui s'y trouve en application.

Les goujons transversaux, qui peuvent être réalisés sous la forme de boulons ou analogues, sont alors disposés par leur première extrémité dans une contre-dépouille de la baguette profilée, de sorte qu'ils sont maintenus sans possibilité de rotation et sans possibilité de translation dans la direction longitudinale du goujon. Par contre, ils peuvent très bien présenter une liberté de mouvement dans la direction longitudinale des baguettes profilées.

Comme éléments porteurs de lubrifiant, on peut envisager des matériaux en soi connus, donc des matériaux tricotés, emmêlés ou tissés, notamment en nappe, donc par exemple une bande de feutre.

D'autres caractéristiques et avantages ressortent de la description qui suit d'un exemple de réalisation, effectuée à l'aide des dessins annexés dans lesquels
la figure 1 est une vue en projection biaise d'un taille-haies,
les figures 2 et 3 sont respectivement une vue de côté et une vue de dessus des lames de cisaillement dans une première position,
les figures 4 et 5 sont respectivement une vue de côté et une vue de dessus des mêmes lames de cisaillement, dans une deuxième position en décalage mutuel,
la figure 6 est une vue en coupe transversale à travers les lames de cisaillement pourvues de la baguette de guidage, dans la région de l'élément porteur de lubrifiant, et
la figure 7 est la même vue en coupe transversale dans la région des goujons transversaux.

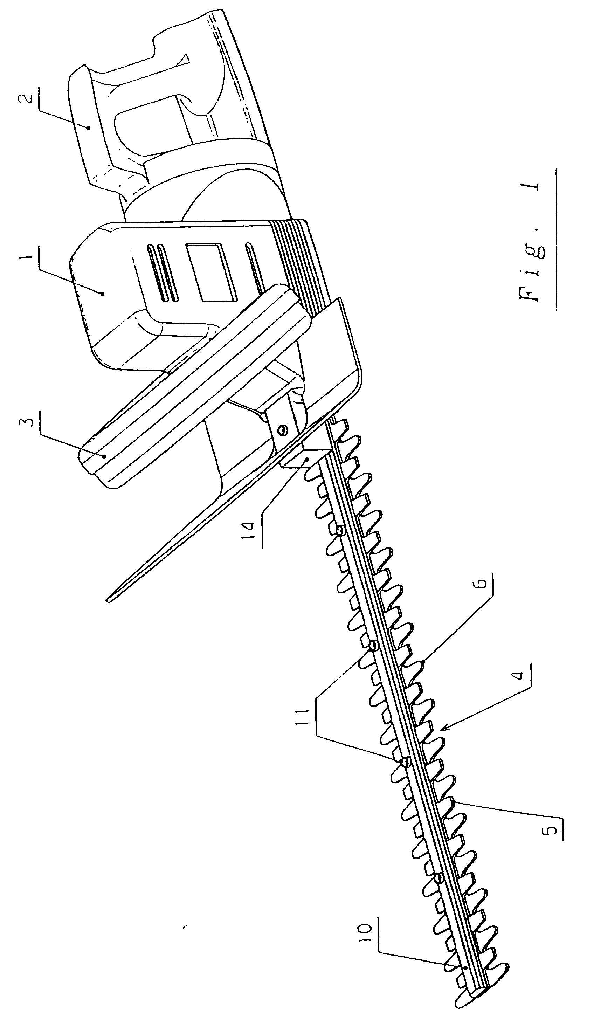

Sur la figure 1, on reconnaît un taille-haies constitué d'un carter 1 avec deux poignées 2 et 3. Chaque poignée présente un propre interrupteur, de sorte que c'est seulement par l'actionnement conjoint des deux interrupteurs que le dispositif de coupe 4 est mis en marche par un moteur électrique disposé dans le carter 1.

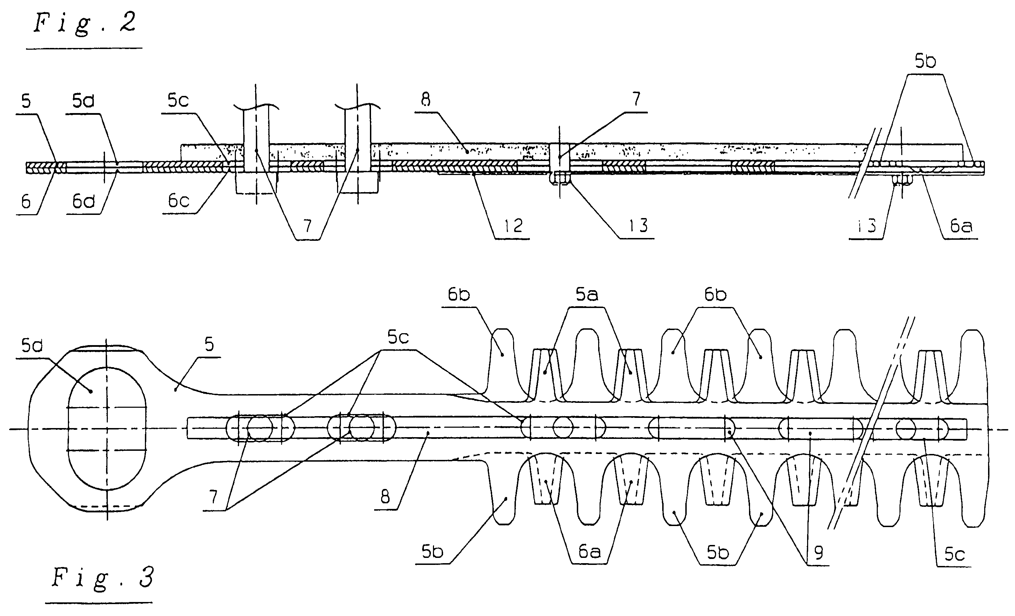

Le dispositif de coupe 4 est lui-même constitué de deux lames de cisaillement 5 et 6, qui sont représentées plus en détail sur les figures 2 à 5. Elles présentent chacune, sur un de leurs côtés, une pluralité de dents de coupe 5a, 6a transversalement saillantes et, sur leur côté opposé, des dents de sécurité 5b, 6b légèrement plus longues, et elles sont, par leur bande centrale s'étendant de bout en bout en direction longitudinale, posées l'une sur l'autre de telle sorte que chaque dent de coupe 5a de la lame de cisaillement supérieure 5 entre, lors du processus de coupe, successivement en contact avec deux dents de sécurité 6b, voisines de cette dent 5a, de l'autre lame de cisaillement 6, de sorte qu'elle accomplit l'opération de coupe une fois avec un tranchant avant, et l'autre fois avec un tranchant arrière. C'est également vrai pour les dents de coupe 6a de l'autre lame de cisaillement 6, qui coopèrent avec les dents de sécurité 5b de la lame de cisaillement supérieure 5.

Plusieurs fentes longitudinales 5c et 6c, qui sont traversées par des goujons transversaux 7, servent au guidage des deux lames de cisaillement 5 et 6 qui se déplacent en va-et-vient. On reviendra plus loin sur la fixation de ces goujons.

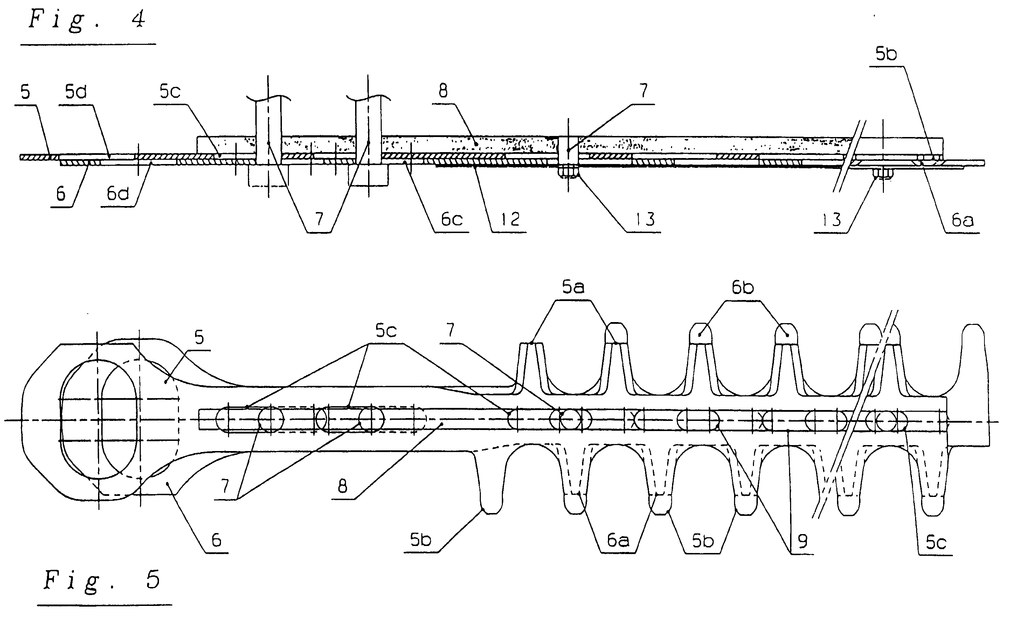

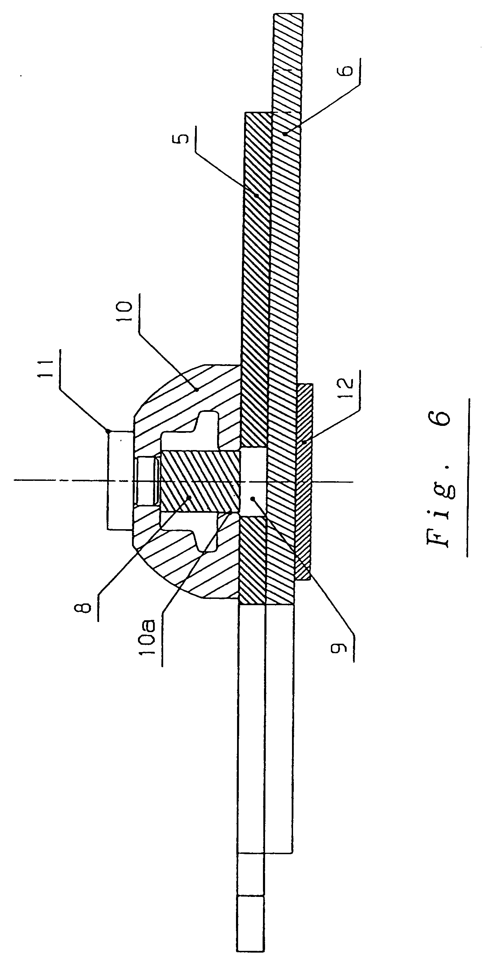

La production du mouvement de va-et-vient s'effectue par deux excentriques non représentés, qui tournent dans un trou oblong respectif 4d, 6d disposé terminalement, qui est orienté transversalement à l'étendue longitudinale de la lame de cisaillement. Les lames de cisaillement accomplissent ainsi un mouvement longitudinal de va-et-vient l'une par rapport à l'autre, entre, d'une part, la position représentée sur les figures 2 et 3 et, d'autre part, la position représentée sur les figures 4 et 5.

L'important est maintenant qu'un élément porteur de lubrifiant 8 est disposé sur le côté extérieur de l'une des lames de cisaillement, dans le présent exemple de réalisation sur le côté supérieur de la lame de cisaillement supérieure 5, élément qui recouvre la région centrale de cette lame en direction longitudinale. Cet élément s'étend quasiment du début à la fin de la lame de cisaillement, et il est seulement évidé dans la région des goujons transversaux 7 et éventuellement dans la région du trou oblong 5d. Dans la pratique, il est constitué de plusieurs bandes de feutre successives. La largeur de la baguette profilée est opportunément approximativement égale à la largeur de la région centrale ininterrompue, dépourvue de dents, des lames de cisaillement.

Afin que le lubrifiant délivré par l'élément porteur de lubrifiant sur le côté supérieur de la lame de cisaillement supérieure 5 soit amené à la surface de glissement entre les deux lames de cisaillement, la lame de cisaillement supérieure 5 est pourvue d'une série de fentes longitudinales supplémentaires 9. Au lieu ou en plus de quoi, les fentes longitudinales 5c déjà citées, qui servent au guidage des lames de cisaillement sur les goujons transversaux 7, peuvent être aussi utilisées pour l'écoulement du lubrifiant depuis l'élément porteur de lubrifiant 8 jusqu'à la surface de glissement entre les deux lames de cisaillement. A cet effet, elles peuvent être réalisées plus larges qu'il serait en soi nécessaire pour le mouvement des lames.

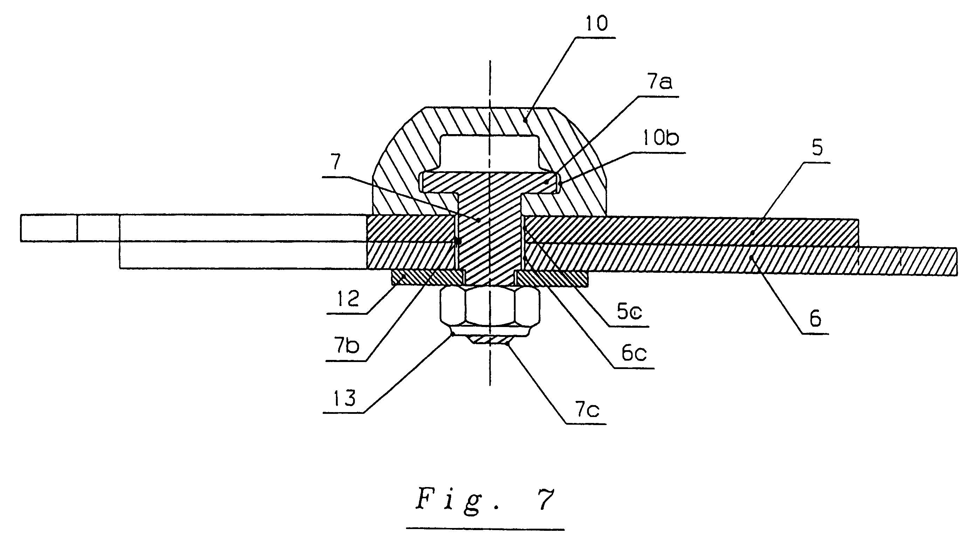

La fixation de l'élément porteur de lubrifiant ressort plus en détail de la figure 6. On y reconnaît une baguette profilée 10 en forme de cuvette, qui contient dans son profil creux l'élément porteur de lubrifiant 8 et repose par son côté ouvert sur la lame de cisaillement 5. Elle est opportunément assemblée fixement et notamment en étanchéité aux liquides à la lame de cisaillement 5, par des vis non représentées ici, de sorte que le lubrifiant ne peut pas s'échapper vers l'extérieur, mais peut au contraire seulement atteindre, par les fentes 9 disposées en dessous de l'élément porteur de lubrifiant 8, la surface de glissement entre les deux lames de cisaillement.

La section de l'élément porteur de lubrifiant 8 est dimensionnée de telle sorte que l'élément remplit en hauteur la cavité dans la baguette profilée 10, notamment traverse l'ouverture 10a sur le côté inférieur de la baguette profilée et se termine environ à fleur du bord inférieur de la baguette profilée. Il est ainsi garanti que la lame de cisaillement 5 entre en contact avec l'élément porteur de lubrifiant lors de son mouvement de va-et-vient.

Pour le remplissage d'appoint de lubrifiant, la baguette profilée 10 présente quelques graisseurs suggérés par la référence 11, par lesquels le lubrifiant peut être directement apporté à l'élément porteur de lubrifiant 8 De plus, l'élément porteur de lubrifiant peut être raccordé à un réservoir de lubrifiant 14, comme le montre la figure 1. Ce réservoir est opportunément disposé sur le carter 1.

Enfin, la figure 6 montre encore que la baguette profilée 10 présente une épaisseur de paroi nettement plus stable que cela est nécessaire pour recevoir l'élément porteur de lubrifiant 8. La baguette profilée peut ainsi remplacer la baguette de renforcement et de guidage qui était jusqu'alors nécessaire en cet endroit pour les deux lames de cisaillement. On va l'expliquer plus en détail à l'aide de la figure 7.

La figure 7 représente une coupe transversale semblable à la figure 6, mais dans la région d'un goujon transversal 7. Ce goujon transversal 7 présente à son extrémité supérieure une saillie en direction transversale, par exemple un quatre pans 7a, qui pénètre dans une contre-dépouille 10b de la baguette profilée 10. Le goujon transversal 7 est ainsi bloqué en direction verticale ainsi qu'en rotation.

Dans sa région centrale 7b, le goujon présente un diamètre adapté à la largeur des fentes 5c et 6c et une longueur adaptée à l'épaisseur des deux lames de cisaillement 5 et 6, de sorte que les lames de cisaillement reçoivent le guidage souhaité.

Un contre-élément 12 se raccorde axialement à la partie centrale 7b du goujon, ce contre-élément se présentant le plus souvent sous la forme d'une baguette ininterrompue en direction longitudinale, qui est traversée par l'extrémité 5c, en forme de tige de boulon, du goujon transversal 7. Un écrou 13 sert à la fixation en position, la partie centrale 7b garantissant que les lames de cisaillement 5 et 6 ne sont alors pas bloquées l'une contre l'autre.

En avant et en arrière dans le plan du dessin de la figure 7, la cavité de la baguette profilée 10 contient à nouveau l'élément porteur de lubrifiant 8, tel que représenté sur la figure 6. Mais si l'élément porteur de lubrifiant est réalisé en un matériau suffisamment flexible, il peut être comprimé dans la région des goujons transversaux et s'étendre ainsi d'un seul tenant sur toute la longueur de la lame de cisaillement.

## Revendications

1. Dispositif de coupe avec deux lames de cisaillement (5, 6) glissant l'une contre l'autre, notamment taille-haies, au moins une baguette profilée (10) du genre cuvette étant disposée le long d'au moins une première lame de cisaillement (5), sur son côté opposé à l'autre lame de cisaillement (6), baguette qui est au moins partiellement ouverte vers la première lame de cisaillement (5), qui présente des ouvertures (5c, 9) pour le passage de lubrifiant sur les faces de glissement entre les deux lames de cisaillement (5, 6), caractérisé en ce que la baguette profilée (10) contient intérieurement un élément porteur de lubrifiant (8) en matériau absorbant.

2. Dispositif de coupe selon la revendication 1, caractérisé en ce que la baguette profilée (10) est équipée sur son côté extérieur de graisseurs (11) pour le remplissage d'appoint.

3. Dispositif de coupe selon la revendication 1, caractérisé en ce que l'élément porteur de lubrifiant (8) est raccordé à un réservoir de lubrifiant (14) disposé sur le dispositif de coupe.

4. Dispositif de coupe selon la revendication 1, caractérisé en ce que l'élément porteur de lubrifiant (8) s'applique au moins localement contre la première lame de cisaillement (5).

5. Dispositif de coupe selon la revendication 1, le mouvement des lames de cisaillement (5, 6) étant produit par un entraînement à excentrique, caractérisé en ce que l'élément porteur de lubrifiant (8) est prolongé dans la région de l'entraînement à excentrique, notamment d'un trou oblong terminal (5d) de la lame de cisaillement (5).

6. Dispositif de coupe selon la revendication 1, caractérisé en ce que la baguette profilée (10) s'étend quasiment sur toute la longueur de la lame de cisaillement (5).

7. Dispositif de coupe selon la revendication 1, caractérisé en ce que la baguette profilée (10) sert de baguette de renforcement et de guidage pour les deux lames de cisaillement.

8. Dispositif de coupe selon la revendication 1, caractérisé en ce que la baguette profilée (10) présente plusieurs goujons transversaux (7), qui traversent des fentes longitudinales (5c, 6c) des deux lames de cisaillement (5, 6) pour atteindre un contre-élément (12) appliqué contre le côté extérieur de l'autre lame de cisaillement (6).

9. Dispositif de coupe selon la revendication 8, caractérisé en ce que les goujons transversaux (7) sont disposés par leur première extrémité (7a) dans au moins une contre-dépouille (10b) de la baguette profilée (10), notamment y sont maintenus sans possibilité de rotation et sans possibilité de translation dans la direction longitudinale du goujon.

10. Dispositif de coupe selon la revendication 1, caractérisé en ce que la baguette profilée (10) est disposée sur la lame de cisaillement supérieure (5).

11. Dispositif de coupe selon la revendication 1, caractérisé en ce que l'élément porteur de lubrifiant (8) est constitué d'un matériau tricoté, emmêlé ou tissé, notamment en nappe.

## Claims

1. Cutting device with two shearing blades (5, 6) sliding one against the other, in particular hedge trimmer, at least one profiled rod (10) of the dish type being disposed along at least one first shearing blade (5) on its side remote from the other shearing blade (6), the rod being at least partially open toward the first shearing blade (5) which has orifices (5c, 9) for the passage of lubricant over the sliding faces between the two shearing blades (5, 6), characterised in that the profiled rod (10) contains internally a lubricant-carrying element (8) of absorbent material.

2. Cutting device according to claim 1, characterised in that the profiled rod (10) is equipped on its external side with grease nipples (11) for topping up.

3. Cutting device according to claim 1, characterised in that the lubricant-carrying element (8) is connected to a lubricant reservoir (14) disposed on the cutting device.

4. Cutting device according to claim 1, characterised in that the lubricant-carrying element (8) is applied at least locally to the first shearing blade (5).

5. Cutting device according to claim 1, the movement of the shearing blades (5, 6) being produced by a cam drive, characterised in that the lubricant-carrying element (8) is extended in the region of the cam drive, in particular by a terminal oblong hole (58) of the shearing blade (5).

6. Cutting device according to claim 1, characterised in that the profiled rod (10) extends almost over the entire length of the shearing blade (5).

7. Cutting device according to claim 1, characterised in that the profiled rod (10) acts as a reinforcing and guide rod for the two shearing blades.

8. Cutting device according to claim 1, characterised in that the profiled rod (10) has a plurality of transverse bolts (7) which traverse longitudinal slots (5c, 6c) in two shearing blades (5, 6) and reach a counter element (12) applied to the external side of the other shearing blade (6).

9. Cutting device according to claim 8, characterised in that the transverse bolts (7) are disposed with their first end (7a) in at least one undercut (10b) of the profiled rod (10), in particular are held there without the possibility of rotation and without the possibility of translation in the longitudinal direction of the bolt.

10. Cutting device according to claim 1, characterised in that the profiled rod (10) is disposed on the upper shearing blade (5).

11. Cutting device according to claim 1, characterised in that the lubricant-carrying element (8) consists of a knit, interlaced or woven material, in particular in sheet form.

## Patentansprüche

1. Schneidvorrichtung mit zwei aneinandergleitenden Scherblättern (5, 6), insbesondere Heckenschere, wobei entlang zumindest einem ersten Scherblatt (5) an dessen dem anderen Scherblatt (6) abgewandten Seite zumindest eine wannenartige Profilleiste (10) angeordnet ist, die zu dem ersten Scherblatt (5) hin zumindest teilweise offen ist und wobei das erste Scherblatt (5) Öffnungen (5c, 9) aufweist zum Durchtritt von Schmiermittel an die Gleitflächen zwischen beiden Scherblättern (5, 6),
dadurch gekennzeichnet,
daß die Profilleiste (10) einen Schmiermittelträger (8) aus saugfähigem Material enthält.

2. Schneidvorrichtung nach Anspruch 1,
dadurch gekennzeichnet,
daß die Profilleiste (10 an ihrer Außenseite mit Schmiernippeln (11) zum Nachfüllen bestückt ist.

3. Schneidvorrichtung nach Anspruch 1,
dadurch gekennzeichnet,
daß der Schmiermittelträger (8) an einen an der Schneidvorrichtung angeordneten Schmiermittelvorratsbehälter (14) angeordnet ist.

4. Schneidvorrichtung nach Anspruch 1,
dadurch gekennzeichnet,
daß der Schmiermittelträger (8) zumindest lokal an dem ersten Scherblatt (5) anliegt.

5. Schneidvorrichtung nach Anspruch 1, wobei die Bewegung der Scherblätter (5, 6) durch einen Exzenterantrieb erzeugt wird,
dadurch gekennzeichnet,
daß der Schmiermittelträger (8) in den Bereich des Exzenterantriebes, insbesondere eines endständigen Langloches (5d) des Scherblattes (5) verlängert ist.

6. Schneidvorrichtung nach Anspruch 1,
dadurch gekennzeichnet,
daß die Profilleiste (10) nahezu über die gesamte Länge des Scherblattes (5) durchläuft.

7. Schneidvorrichtung nach Anspruch 1,
dadurch gekennzeichnet,
daß die Profilleiste (10) als Versteifungs- und Führungsleiste für die beiden Scherblätter dient.

8. Schneidvorrichtung nach Anspruch 1,
dadurch gekennzeichnet,
daß die Profilleiste (10) mehrere Querstifte (7) aufweist, die durch Längsschlitze (5c, 6c) beider Scherblätter (5, 6) hindurchgehen bis zu einem an der Außenseite des anderen Scherblattes (6) anliegenden Gegenstück (12).

9. Schneidvorrichtung nach Anspruch 8,
dadurch gekennzeichnet,
daß die Querstifte (7) mit ihrem einen Ende (7a) in zumindest einer Hinterschneidung (10b) der Profilleiste (10) angeordnet, insbesondere undrehbar und in Stiftlängsrichtung unverschiebbar gehalten sind.

10. Schneidvorrichtung nach Anspruch 1,
dadurch gekennzeichnet,
daß die Profilleiste (10) am oberen Scherblatt (5) angeordnet ist.

11. Schneidvorrichtung nach Anspruch 1,
dadurch gekennzeichnet,
daß der Schmiermittelträger (8) aus einem Gewirk-, Wirr- oder gewebten Stoff, insbesondere aus Vlies besteht.
